# FASCICULE DE BREVET EUROPEEN

(11) **EP 1 799 408 B1**
(45) Date de publication et mention de la délivrance du brevet: **14.11.2012**
(21) Numéro de dépôt: 05794714.5
(22) Date de dépôt: 19.09.2005
(51) Int. Cl.: B26D 3/02

(54) **COUPE DE PRODUITS CAOUTCHOUTIQUES PREASSEMBLES**
VORMONTIERTE KAUTSCHUKSCHNEIDEPRODUKTE
CUTTING PRE-ASSEMBLED RUBBER PRODUCTS

(30) Priorité: 08.10.2004 FR 0410770
(43) Date de publication de la demande: 27.06.2007
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: GONZALEZ, Antonio, F-63720 ENNEZAT (FR); HILLARD, Michel, F-54200 TOUL (FR)
(74) Mandataire: Lasson, Cédric Y. M.
(86) Numéro de dépôt international: PCT/EP2005/054648
(87) Numéro de publication internationale: WO 2006/037723

(56) Documents cités:
- WO-A-00/51810
- DE-U1- 8 715 637
- US-A- 4 656 910
- US-A- 5 077 899
- US-A- 5 231 910
- US-A1- 2004 035 271
- PATENT ABSTRACTS OF JAPAN vol. 2000, no. 18, 5 juin 2001 (2001-06-05) -& JP 05 203246 A (GLASS MASTER CORP), 10 août 1993 (1993-08-10)

## Description

Le domaine de l'invention concerne la réalisation de pneumatiques et plus particulièrement l'assemblage de produits caoutchoutiques sur une forme cylindrique, une lame de coupe et un ensemble de coupe selon le préambule des revendications 1, 3 et 9. De tels procédé, lame et ensemble de coupe sont décrits dans le document US 2004/0035271A. La fabrication de pneumatiques destinés aux véhicules automobiles, s'effectue traditionnellement en déposant sur un tambour d'assemblage des profilés caoutchouteux et des nappes de renfort formées de fils de renfort textiles ou métalliques enrobés dans un mélange caoutchouteux et faisant un angle donné avec la direction longitudinale.

Le procédé d'assemblage consiste donc à prélever par découpe des tronçons de produits de longueur donnée, depuis une bande continue constituée du profilé ou de la nappe de renfort, d'enrouler ce tronçon sur le tambour, et d'abouter les deux extrémités du tronçon.

Dans ce contexte, la qualité du joint réalisé dépend dans une large mesure de la qualité de la coupe effectuée lors de l'extraction du tronçon.

Ainsi on peut souhaiter réaliser des soudures dites bout à bout, dans lesquelles les extrémités des produits sont aboutées sans superposition. Dans ce cas, il convient généralement de couper la bande de profilé avec un léger angle pour augmenter la surface de contact entre les deux extrémités et obtenir une soudure présentant une bonne résistance à la traction. La nappe de renfort est obtenue en tranchant la bande entre deux fils de renfort et, après avoir enroulé le tronçon de nappe de renfort sur un tambour d'assemblage, la jonction s'opère en aboutant bout à bout les deux extrémités le long des fils situés de part et d'autre de la coupe. Ces opérations nécessitent une grande précision d'exécution de manière à ce que la longueur du tronçon corresponde assez précisément à la circonférence de pose.

C'est pourquoi on peut préférer réaliser la jonction des deux extrémités des tronçons de profilé ou de nappe de renfort par superposition des deux extrémités sur une faible longueur. Cette manière de procéder est particulièrement avantageuse lorsque les produits à abouter ont une épaisseur faible.

De manière générale, et afin de réduire les coûts d'assemblage, il est également d'usage très courant de pré assembler les bandes de produits profilés, entre elles ou sur une nappe de renfort, et de constituer des bandes contenant des produits différents pré assemblés. Il est alors possible de réaliser la pose de plusieurs produits simultanément sur le tambour d'assemblage.

Cette pratique conduit à choisir de réaliser des aboutages sans superposition afin que les extrémités de profilés ou de nappe de renfort de même nature se rejoignent bout à bout de manière à éviter que des produits de nature différentes se retrouvent superposés l'un sur l'autre au niveau de la soudure.

On entend par nature différente, des profilés ou des nappes de renfort ayant des caractéristiques physico chimiques et géométriques différentes.

De nombreux dispositifs ou procédés de coupe et d'assemblage sont proposés pour réaliser ce type de découpe en particulier pour découper des bandes de produits pré assemblés comprenant une nappe de renfort, et pour lesquels une attention toute particulière doit être apportée à la coupe de la nappe de renfort de manière à ne pas détériorer les fils de renfort.

La publication US 2004/0035271 propose un dispositif d'un profil particulier permettant de maintenir la nappe de renfort par en dessous du plan de la nappe, et de réaliser la coupe d'une bande de produits pré assemblés à l'aide d'une lame de coupe à ultrason, de manière à conférer aux plan de coupe des produits sectionnés des angles donnés différents. Pour ce faire, la lame de coupe est introduite dans la nappe de renfort de manière à sectionner l'interface entre deux fils de renfort et à soulever ledit fil au dessus de la lame ; la coupe s'effectue en déplaçant la lame transversalement le long du dit fil.

La publication WO00/51810 présente la réalisation d'une coupe à l'aide de deux lames dont l'une, positionnée en dessous du plan de la nappe de renfort, réalise la coupe de ladite nappe de renfort, et l'autre positionnée au dessus du plan de la nappe de renfort, réalise la coupe des profilés caoutchouteux à un angle prédéterminé.

Toutefois ces procédés de coupe ne sont pas aptes à réaliser un front de coupe permettant de réaliser la jonction des extrémités par superposition sans que des produits de nature différentes se retrouvent superposés l'un sur l'autre au niveau de la soudure.

L'invention a pour objet d'apporter une solution à ce problème par une lame ayant les caractéristiques de la revendication 1, un ensemble ayant les caractéristiques de la revendication 3 et un procédé ayant les caractéristiques de la revendication 9.

Le dispositif de coupe, objet de l'invention, comprend une lame de coupe d'un profil particulier formant trois zones distinctes permettant de sectionner simultanément la nappe de renfort, l'interface entre la nappe de renfort et les profilés caoutchouteux préalablement assemblés sur ladite nappe de renfort, et les profilés caoutchouteux eux-mêmes.

La lame de coupe est composée d'une tranche se situant dans un plan faisant un angle aigus déterminé α avec un plan de référence P, d'une semelle se situant dans un plan sensiblement parallèle au plan de référence P, et d'une pointe de forme généralement triangulaire se situant dans un plan faisant sensiblement un angle droit avec ledit plan de référence.

Un fil de coupe est disposé sur les parties latérales de la pointe, de la semelle et de la tranche.

La coupe d'un tronçon de bande, comprenant au moins une nappe de renfort, s'effectue en plongeant la pointe de la lame entre deux fils de renfort jusqu'à ce que la semelle de la lame affleure le plan de la nappe de renfort. Puis, en déplaçant transversalement la lame de coupe le long du fil de renfort en veillant à maintenir la semelle au contact de la partie supérieure de la nappe de renfort, la lame sectionne les différents produits constituant la bande pré assemblée. Plus précisément, la pointe sectionne la nappe de renfort entre deux câbles, la tranche assure la découpe des produits profilés déposés sur la nappe de renfort.et la semelle de la lame sectionne l'interface entre la nappe de renfort et les produits profilés sur une longueur donnée qui constituera la zone de recouvrement des deux extrémités du tronçon de bande.

Le tronçon de bande ainsi obtenu peut être déposé sur un tambour d'assemblage, et la jonction des deux extrémités du tronçon se fait par superposition des dites extrémités sur la longueur correspondant à la longueur de la coupe effectuée par la semelle de la lame. Dans ces conditions les deux extrémités de la nappe de renfort sont au contact l'une de l'autre et se recouvrent directement sur ladite longueur de recouvrement. Les profilés se recouvrent également de manière à ce que les profilés ou les nappes de même nature se retrouvent superposés en contact direct.

De cette manière il n'y a pas de produit caoutchouteux provenant d'un profilé de nature différente au niveau de la zone de recouvrement des deux extrémités de la nappe de renfort.

Pour une meilleure homogénéité du joint des deux extrémités du tronçon de bande on évitera, au moment de l'opération de pré assemblage des profilés caoutchouteux sur la nappe de renfort, de superposer deux profilés l'un sur l'autre de manière à ce que, lors de la réalisation du joint d'assemblage, les extrémités des produits profilés recouvrent l'extrémité du produit profilé ayant des caractéristiques géométriques et matériau identiques.

Une forme d'exécution particulière de l'invention, consiste à partager la lame en deux demi lames portant chacune une partie du fil de coupe. On remarquera en effet que le mode opératoire exposé ci-dessus nécessite d'effectuer la coupe d'un bord à l'autre de la bande de produits pré assemblés. Cela conduit à disposer d'un moyen permettant de maintenir fermement le produit sur un des deux bords extrémité pour compenser la force transversale communiquée à la lame pour effectuer la coupe. En déplaçant simultanément les deux demi lames dans la même direction, mais dans des sens opposés le long du fil de renfort, les forces de coupe se compensent.

Un dispositif de coupe conforme à l'invention, et le procédé d'assemblage contenant un tel dispositif, sont décrits ci après ainsi que dans les schémas et figures dans lesquels :
- la figure 1 représente une vue schématique d'une jonction par superposition de deux extrémités de produits pré assemblés effectuée selon l'art antérieur,
- la figure 2 représente une vue schématique de la coupe d'un produit pré assemblé avec une lame conforme à l'invention,
- la figure 3 représente une vue schématique d'une jonction par superposition de deux extrémités de produits pré assemblés dans laquelle les fils de renfort se superposent directement les uns sur les autres,
- la figure 4 représente une vue schématique en perspective d'une lame de coupe conforme à l'invention,
- la figure 5 représente une vue schématique en perspective de deux demi lames de coupe agencées conformément à l'invention,
- la figure 6 représente une vue schématique en perspective de deux demi lames de coupe comprenant une gorge de positionnement,
- la figure 7 représente une vue schématique en perspective de l'étape du procédé conforme à l'invention au cours de laquelle les deux demi lames pénètrent dans la bande de produits pré assemblés,
- la figure 8 représente une vue schématique en perspective de l'étape du procédé conforme à l'invention au cours de laquelle les deux demi lames effectuent la coupe de la bande de produit pré assemblés.

Les éléments identiques ou couvrant des fonctions équivalentes sont désignés par des numéros identiques dans chacun des schémas.

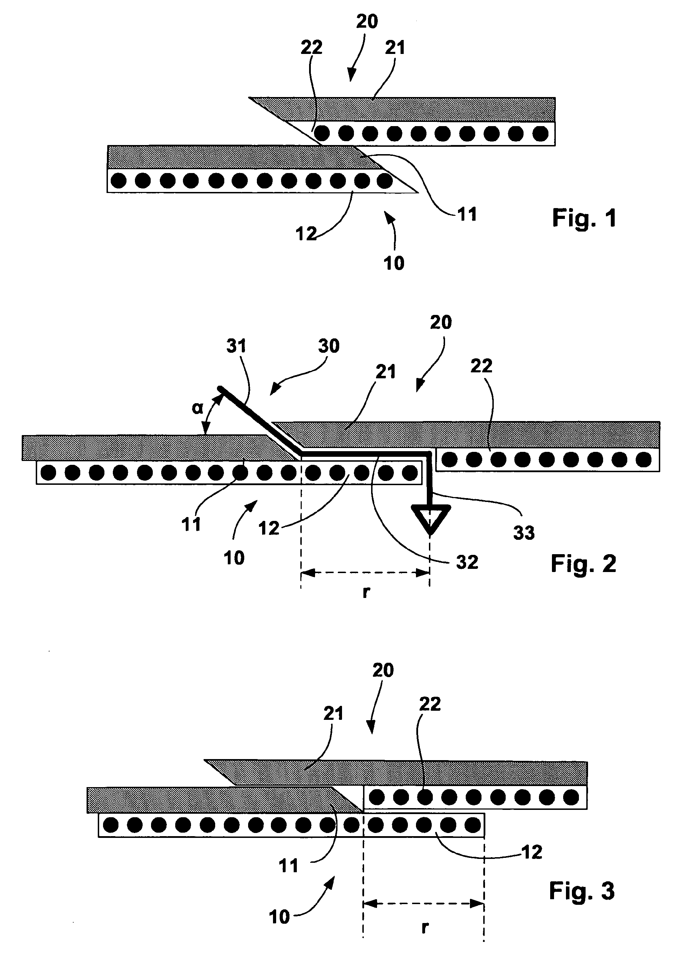

La figure 1 représente une vue schématique d'un joint par superposition de deux extrémités 10, 20 de produits pré assemblés comprenant une nappe de renfort 12, 22 et des profilés caoutchouteux 11, 21. La coupe de la bande a été effectuée à l'aide d'un dispositif de coupe classique, et on remarque, au niveau de la zone de recouvrement, que l'extrémité du profilé caoutchouteux 11 s'intercale entre les extrémités des nappes de renfort 12, 22.

La figure 2 représente une vue schématique de la coupe d'un ensemble de produits pré assemblés comprenant une nappe de renfort 12, 22, et des produits profilés 11, 21, disposés sur la nappe de renfort.

Les trois zones composant la lame de coupe 30 comprennent :
- la pointe 33 de forme généralement triangulaire, se situant dans un plan sensiblement perpendiculaire au plan de la nappe de renfort et qui sectionne la nappe de renfort le long d'un fil de renfort,
- la semelle 32, de longueur r, se situant dans un plan sensiblement parallèle au plan de la nappe de renfort et qui sectionne l'interface entre la nappe de renfort 12, 22 et les produits profilés 11, 21 sur une longueur sensiblement égale à la longueur r,
- une tranche 31, se situant dans un plan faisant un angle α donné, avec le plan de la nappe de renfort et qui sectionne les produits profilés.

La jonction par superposition des deux extrémités 10 et 20 est représentée à la figure 3, où l'on peut observer que les fils de renfort se superposent directement au niveau du joint desdites extrémités 12 et 22 sur une longueur de recouvrement approximativement égale à r, et que l'extrémité du produit profilé 11 ne vient plus s'intercaler entre les ces deux extrémités de nappe de renfort.

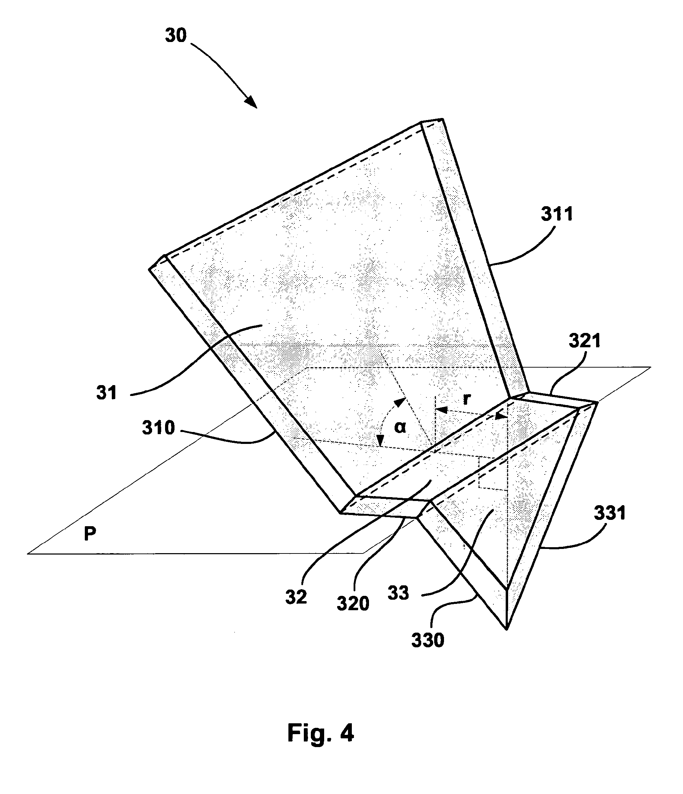

La figure 4 représente la lame de coupe en vue schématique perspective, où l'on peut reconnaître la pointe 33 de forme généralement triangulaire qui forme un plan sensiblement perpendiculaire à un plan P de référence, la semelle 32 située dans un plan sensiblement parallèle au plan de référence P, et la tranche 31 qui est située dans un plan faisant un angle α donné avec ledit plan de référence P.

La détermination de l'angle α est laissée à l'appréciation de l'homme du métier. Toutefois cet angle sera inférieur à 90° et de préférence compris entre 15° et 45°.

Le fil de coupe, qui constitue la partie aiguisée et tranchante de la lame de coupe, est disposé sur les cotés transversaux opposés de la tranche de chacun de ces éléments respectivement 310 et 311, 320 et 321, et 330 et 331, ces deux derniers fils de coupe se rejoignant en pointe.

La longueur r de la semelle 32 est déterminée en fonction de la longueur désirée de recouvrement entre les deux extrémités de tronçon 10 et 20, et plus particulièrement du nombre de fils de renfort qu'il est acceptable de superposer au niveau du joint des deux extrémités du tronçon de nappe de renfort 12 et 22.

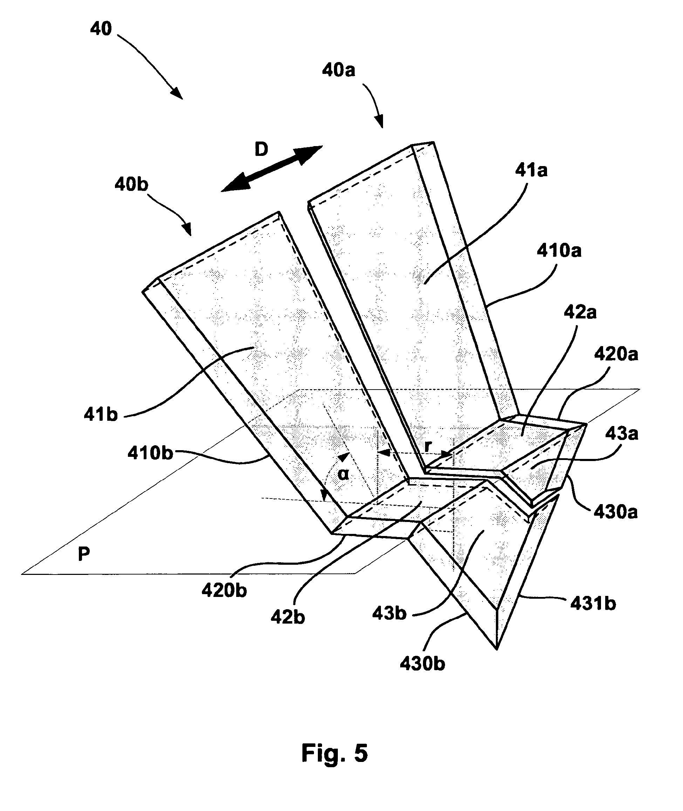

La forme de réalisation particulière représentée sur la figure 5 concerne un ensemble de coupe formé de deux demi lames de coupe 40a, 40b, composées chacune d'une demi pointe 43a, 43b dont les formes sont complémentaires l'une de l'autre de manière à décrire une forme généralement triangulaire lorsque les demi pointes 43a, 43b sont assemblées l'une en vis-à-vis de l'autre, située dans un plan formant sensiblement un angle droit avec le plan de référence P, d'une demi semelle 42a, 42b, de longueur r, située dans un plan sensiblement parallèle au plan de référence P, et d'une demi tranche 41a, 41b, située dans un plan formant un angle aigu déterminé α avec le plan de référence P.

Les deux demi pointes ont une forme adaptée de manière à ce que seulement une seule d'entre elle, 43b, porte la partie où se rejoignent les deux fils de coupe latéraux 430b et 431b de la pointe. L'autre demi pointe, 43a comprend un fil de coupe 430a sur la partie de son profil latéral située dans le prolongement du fil de coupe 431b de l'autre demi pointe, 43b.

Cette disposition particulière a pour objet de faciliter la pénétration des deux demi pointes dans l'ensemble de produits pré assemblés et plus particulièrement de ne pas endommager les fils de renfort de la nappe de renfort au moment de la pénétration de l'ensemble de coupe dans cette dernière.

Les fils de coupe 420a et 420 b de la semelle sont situés sur les cotés latéralement opposés des chacune des demi semelles 42a et 42b. Les fils de coupe de la tranche, 410a et 410b, sont situés sur les cotés latéralement opposés des demi tranches 41a et 41b.

Les deux demi lames sont mobiles dans une direction transversale D parallèle à l'intersection de deux des plans formés respectivement par les demi pointes 43a et 43b, les demi semelles 42a et 42b et les demi tranches 41a et 41b.

De cette façon, en déplaçant simultanément en sens inverse les deux demi lames le long de la direction D on peut sectionner la bande de produits pré assemblés de telle manière que les efforts liés à la coupe s'annulent.

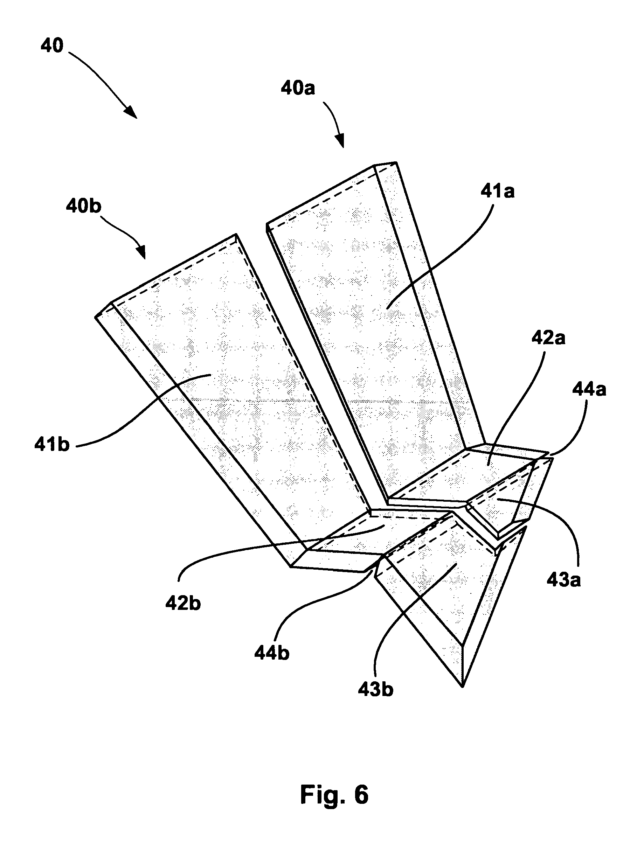

Un mode de réalisation particulier de l'invention s'avère particulièrement intéressant et consiste à réaliser une gorge de guidage 44a et 44b telle que représentée sur la figure 6. Cette gorge 44a, 44b est située au niveau du raccordement du plan des demi semelles (42a, 42b) en contact avec la nappe de renfort avec le plan adjacent des demi pointes 43a, 43b. Elle permet d'assurer un meilleur guidage de la lame de coupe le long du bord de coupe de la nappe de renfort. Cette gorge est réalisée dans l'épaisseur de la lame de coupe et doit être suffisamment ouverte pour que le bord de la nappe puisse s'y engager.

Ce mode de réalisation particulier s'adapte aussi bien à une lame de coupe telle que représentée sur la figure 4, ou à un ensemble de coupe comprenant deux demi lames et tel que représenté sur la figure 5.

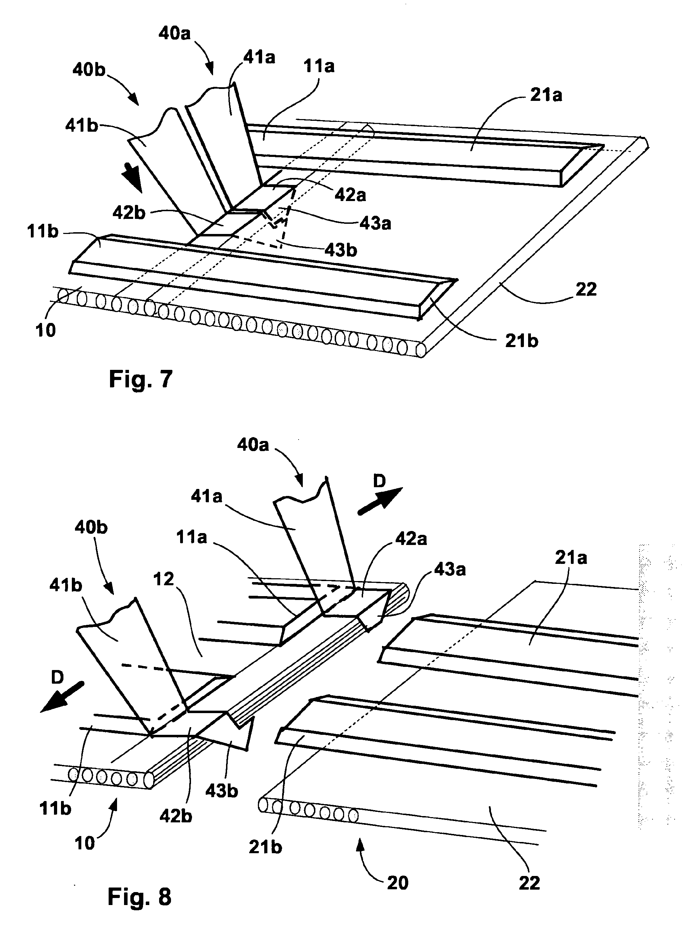

Les figures 7 et 8 décrivent des phases particulières d'un procédé d'assemblage destiné à la réalisation de pneumatiques mettant en oeuvre un dispositif de coupe conforme à l'invention.

Ce procédé comprend la coupe et l'aboutage des extrémités longitudinale 10 et 20, de tronçons de bande de produits pré assemblés, constitué, d'au moins une nappe de renfort, (12, 22), formée de fils de renfort enrobés dans un mélange caoutchouteux, parallèles entre eux et faisant un angle donné avec la direction longitudinale de la bande, et sur laquelle ont été préalablement déposés, dans la direction longitudinale de ladite bande, des bandes de profilés caoutchoutiques respectivement 11a, 11b, 21a, 21b.

Le pré assemblage des bandes de produit est réalisé dans une étape antérieure dont la mise en oeuvre fait appel à des procédés largement connus de l'homme du métier et non décrite dans le présent document.

A titre d'exemple non limitatif, cet ensemble de produits pré assemblés en bande peut être constitué :
- d'une ou plusieurs nappes de renfort carcasse,
- des profilés caoutchouteux destinés à la protection des flancs,
- des profilés destinés au renfort du sommet.

A l'étape d'assemblage, la coupe de la bande dans le but de réaliser un tronçon destiné à être posé sur un tambour d'assemblage, comprend les étapes suivantes :
- Positionner un ensemble de coupe, formé de deux demi lames de coupe 40a et 40b, composées chacune d'une demi pointe 43a et 43b, de forme généralement triangulaire située dans un plan formant sensiblement un angle droit avec un plan de référence P, d'une demi semelle 42a, 42b, de longueur déterminée r et située dans un plan sensiblement parallèle au plan de référence P, et d'une demi tranche 41a, 41b située dans un plan formant un angle aigus déterminé α avec le plan de référence P, au droit de ladite bande et sensiblement à équidistance de ses deux bords latéraux, de manière à ce que le plan formé par les demi pointes soit parallèle à la direction des fils de renfort, et que le plan formé par les demi semelles soit sensiblement parallèle au plan de la nappe de renfort.
- Plonger simultanément les deux demi pointes 43a et 43b dans la nappe de renfort jusqu'à ce que les semelles 42a et 42b de chacune des demi lames viennent affleurer la partie supérieure de la nappe de renfort ; le plan des demi semelles est alors parallèle au plan formé par la nappe de renfort et se confond lui-même avec le plan de référence P. La pression de contact entre les deux demi semelles et la partie supérieure de la nappe de renfort doit être ajustée avec soin et en pratique, être la plus légère possible. En effet il convient tout à la fois de ne pas bloquer le déplacement transversal des demi lames et de sectionner le plus proprement possible l'interface entre la nappe de renfort et les produits profilés.
- Déplacer transversalement et dans des directions opposées D, chacune des demi lames de manière à ce que les demi pointes 43a et 43b, sectionnent la nappe de renfort le long d'un fil de renfort, que les demi semelles 42a et 42b, sectionnent l'interface entre la nappe de renfort et les profilés caoutchouteux sur une longueur donnée r, et que les demi tranches 431a et 41 b sectionnent les profilés caoutchouteux en faisant un angle α avec le plan de la nappe de renfort.

Le tronçon de bande formé de tronçons de produits pré assemblés est alors déposé sur un tambour d'assemblage en faisant subir à ce dernier une rotation complète.

L'aboutage des deux extrémités du tronçon se fait par superposition, l'une au contact de l'autre, des deux extrémités de la nappe de renfort 12 et 22 sur la longueur de recouvrement correspondant sensiblement à la longueur r sectionnée par les demi semelles 42a et 42b, et par superposition des extrémités, respectivement 11a, 21a et 11b, 21b, des profilés caoutchouteux de manière à ce que, pour chacun des produits, les deux extrémités soient directement superposées l'une sur l'autre.

De cette manière on obtient une superposition des produits conforme à ce qui est représenté sur la figure 3 précédemment décrite.

De manière à améliorer la coupe il est envisageable de disposer d'un moyen permettant de maintenir les lames ou les demi lames de coupe à une température prédéterminée. Ce moyen de chauffage peut être constitué de résistances embarquées situées sur la lame ou sur chacune des demi lames, par des masses chauffantes mise au contact des lames en position repos ou par circulation de courant électrique dans lesdites lames. La température de chauffage devra être adaptée pour rendre les mélanges caoutchouteux plastiques sans pour autant provoquer la vulcanisation des interfaces.

Il est également possible de faire vibrer les lames à haute fréquence, à l'aide par exemple d'un dispositif à ultrason, afin d'obtenir un plan de coupe de bonne qualité et un joint d'aboutage plus résistant.

## Revendications

1. Lame de coupe (30) destinée au sectionnement de tronçons de bande de produits pré assemblés, lesdits produits étant constitués d'au moins une nappe de renfort (12, 22), formée de fils de renfort enrobés dans un mélange caoutchouteux, parallèles entre eux et faisant un angle donné avec la direction longitudinale de la bande, et sur laquelle ont été préalablement déposés, dans la direction longitudinale de ladite bande, des bandes de profilés caoutchoutiques (11a, 11b, 21a, 21b), ladite lame étant **caractérisée en ce qu'**elle est composée d'une pointe (33) de forme généralement triangulaire, se situant dans un plan faisant sensiblement un angle droit avec un plan de référence P, d'une semelle (32), ayant une longueur donnée (r), et se situant dans un plan sensiblement parallèle au plan de référence P, et d'une tranche (31) se situant dans un plan faisant un angle aigus déterminé (α) avec ledit plan de référence P.

2. Lame de coupe (30) selon la revendication 1 dans laquelle un fil de coupe se situe sur les cotés transversaux opposés de la tranche (310, 311), de la semelle (320, 321) et de la pointe (330, 331).

3. Ensemble de coupe (40) **caractérisé en ce qu'**il comprend deux demi lames de coupe (40a, 40b), composées chacune d'une demi pointe (43a, 43b), dont les formes sont complémentaires l'une de l'autre de manière à décrire une forme généralement triangulaire lorsque lesdites demi pointes sont assemblées l'une en vis-à-vis de l'autre, se situant dans un plan formant sensiblement un angle droit avec un plan de référence P, d'une demi semelle (42a, 42b), de longueur donnée (r), se situant dans un plan sensiblement parallèle au plan de référence P, et d'une demi tranche (41a, 41b), se situant dans un plan formant un angle aigus déterminé (α) avec ledit plan de référence P.

4. Ensemble de coupe (40) selon la revendication 3 dans lequel chacune des demi lames est mobile dans une direction (D) parallèle à l'intersection de deux des plans formés respectivement par les demi pointes (43a, 43b), les demi semelles (42a, 42b) et les demi tranches (41a, 41b).

5. Ensemble de coupe (40) selon la revendication 3 ou 4 dans lequel un fil de coupe se trouve placé sur les deux cotés latéralement opposés des deux demi tranches (410a, 410b), sur les deux cotés latéralement opposés des deux demi semelles (420a, 420b), et dans lequel une demi pointe (43b) comprend la partie où les deux fils de coupe latéraux se rejoignent (430b et 431b) et l'autre demi pointe (43a) comprend un fil de coupe (430a) sur la partie de son profil latéral située dans le prolongement du fil de coupe (431b) de l'autre demi pointe (43b)

6. Lame de coupe (30) selon la revendication 1, ou ensemble de coupe (40) selon la revendication 3, comprenant un moyen de chauffage permettant de maintenir les lames (30) ou les demi lames (40a, 40b) à une température déterminée.

7. Lame de coupe (30) selon la revendication 1, ou ensemble de coupe (40) selon la revendication 3, comprenant un moyen permettant de faire vibrer les lames à haute fréquence de type à ultrason.

8. Lame de coupe (30) selon la revendication 1 ou ensemble de coupe (40) selon la revendication 3, comprenant une gorge de guidage (44a, 44b) située au niveau du raccordement du plan des demi semelles (42, 42a, 42b) en contact avec la nappe de renfort avec le plan adjacent des demi pointes (43, 43a, 43b).

9. Procédé d'assemblage de produits caoutchouteux destiné à la réalisation de pneumatiques comprenant la coupe et l'aboutage des extrémités longitudinale (10, 20) de tronçons de bande de produits pré assemblés, constitués d'au moins une nappe de renfort (12, 22), formée de fils de renfort enrobés dans un mélange caoutchouteux, parallèles entre eux et faisant un angle donné avec la direction longitudinale de la bande, et sur laquelle ont été préalablement déposés, dans la direction longitudinale de ladite bande, des bandes de profilés caoutchoutiques (11a, 11b, 21a, 21b), procédé **caractérisé en ce que** la coupe de ladite bande de produits pré assemblés dans le but de réaliser un tronçon comprend les étapes suivantes :
- positionner un ensemble de coupe, formé de deux demi lames de coupe (40a, 40b) composées chacune d'une demi pointe, dont les formes sont complémentaires l'une de l'autre de manière à décrire une forme généralement triangulaire lorsque lesdites demi pointes sont assemblées l'une en vis-à-vis de l'autre (43a, 43b), situées dans un plan formant sensiblement un angle droit avec un plan de référence P, d'une demi semelle (42a, 42b), de longueur déterminée (r) et située dans un plan sensiblement parallèle au plan de référence P, et d'une demi tranche (41a, 41b) située dans un plan formant un angle aigus déterminé (α) avec le plan de référence P, au droit de ladite bande et sensiblement à équidistance de ses deux bords latéraux, de manière à ce que le plan formé par les demi pointes soit parallèle à la direction des fils de renfort, et que le plan formé par les demi semelles soit sensiblement parallèle au plan de la nappe de renfort,
- plonger simultanément les deux demi pointes (43a, 43b) dans la nappe de renfort jusqu'à ce que les semelles (42a, 42b) de chacune des demi lames viennent affleurer la partie supérieure de la nappe de renfort,
- déplacer transversalement et dans des directions opposées (D), chacune des demi lames, de manière à ce que les demi pointes (43a, 43b) sectionnent la nappe de renfort (22) le long d'un fil de renfort, que les demi semelles (42a, 42b) sectionnent l'interface entre la nappe de renfort et les profilés caoutchouteux sur une longueur donnée (r), et que les demi tranches (41a, 41b) sectionnent les profilés caoutchouteux (21a, 21 b) en faisant un angle α donné avec le plan de la nappe de renfort.

10. Procédé d'assemblage selon la revendication 9 dans lequel l'aboutage des deux extrémités d'un tronçon (10, 20) se fait par superposition l'une au contact de l'autre des deux extrémités de la nappe de renfort (12, 22) sur la longueur de recouvrement correspondant sensiblement à la longueur (r) sectionnée par les demi semelles 42a, 42b), et par superposition desdites extrémités (11, 21) des profilés caoutchouteux de manière à ce que, pour chacun des produits, ces extrémités soient directement superposées l'une sur l'autre.

## Claims

1. Cutting blade (30) intended for cutting lengths of strip or preassembled products, said products consisting of at least one reinforcing ply (12, 22) formed of reinforcing threads coated with a rubber compound, parallel to one another and making a given angle with the longitudinal direction of the strip, and onto which ply have already been laid, in the longitudinal direction of said strip, strips of rubber profiled elements (11a, 11b, 21a, 21b), said blade being **characterized in that** it is made up of a tip (33) of triangular overall shape, situated in a plane making more or less a right angle with a reference plane P, of a sole (32) having a given length (r) and situated in a plane substantially parallel to the reference plane P, and of a face (31) situated in a plane that makes a determined acute angle (α) with said reference plane P.

2. Cutting blade (30) according to Claim 1, in which a cutting edge is situated along the opposite transverse sides of the face (310, 311), of the sole (320, 321) and of the tip (330, 331).

3. Cutting assembly (40) **characterized in that** it comprises two half-cutting blades (40a, 40b) each one made up of a half-tip (43a, 43b), the shapes of which complement one another so that when said half-tips are assembled facing one another they describe a triangular overall shape, situated in a plane more or less making a right angle with a reference plane P, of a half-sole (42a, 42b) of given length (r), situated in a plane substantially parallel to the reference plane P, and of a half-face (41a, 41b) situated in a plane forming a determined acute angle (α) with said reference plane P.

4. Cutting assembly (40) according to Claim 3, in which each of the half-blades is able to move in a direction (D) parallel to the intersection of two of the planes formed respectively by the half-tips (43a, 43b), the half-soles (42a, 42b) and the half-faces (41a, 41b).

5. Cutting assembly (40) according to Claim 3 or 4, in which a cutting edge is positioned along the two laterally opposite sides of the two half-faces (410a, 410b), along the two laterally opposite sides of the two half-soles (420a, 420b), and in which one half-tip (43b) comprises the part at which the two lateral cutting edges (430b and 431b) meet and the other half-tip (43a) comprises a cutting edge (430a) on that part of its lateral profile that lies in the continuation of the cutting edge (431b) of the other half-tip (43b).

6. Cutting blade (30) according to Claim 1, or cutting assembly (40) according to Claim 3, comprising a heating means able to keep the blades (30) or the half-blades (40a, 40b) at a determined temperature.

7. Cutting blade (30) according to Claim 1, or cutting assembly (40) according to Claim 3, comprising a means that allows the blades to be vibrated at a high frequency of the ultrasonic type.

8. Cutting blade (30) according to Claim 1, or cutting assembly (40) according to Claim 3, comprising a guide groove (44a, 44b) situated in the region where the plane of the half-soles (42, 42a, 42b) in contact with the reinforcing ply meets the adjacent plane of the half-tips (43, 43a, 43b).

9. Method of assembling rubber products intended for the creation of pneumatic tyres involving cutting and butting together the longitudinal ends (10, 20) of lengths of strip of preassembled products which consist of at least one reinforcing ply (12, 22) formed of reinforcing threads coated in a rubber compound, parallel to one another and making a given angle with the longitudinal direction of the strip, and onto which have already been laid, in the longitudinal direction of said strip, strips of rubber profiled elements (11a, 11b, 21a, 21b), the method being **characterized in that** the cutting of said strip of preassembled products with a view to creating a length comprises the following steps:
- positioning a cutting assembly, formed of two half-cutting blades (40a, 40b) each one made up of a half-tip, the shapes of which complement one another so that when said half-tips are assembled facing one another (43a, 43b) they describe a triangular overall shape, situated in a plane more or less making a right angle with a reference plane P, of a half-sole (42a, 42b) of determined length (r), situated in a plane substantially parallel to the reference plane P, and of a half-face (41a, 41b) situated in a plane forming a determined acute angle (α) with said reference plane P, in line with said strip and substantially equidistant from its two lateral edges, so that the plane formed by the half-tips is parallel to the direction of the reinforcing threads, and so that the plane formed by the half-soles is more or less parallel to the plane of the reinforcing ply,
- simultaneously driving the two half-tips (43a, 43b) into the reinforcing ply until the soles (42a, 42b) of each of the half-blades are flush with the upper part of the reinforcing ply,
- moving each of the half-blades transversely and in opposite directions (D) so that the half-tips (43a, 43b) cut through the reinforcing ply (22) along a reinforcing thread, so that the half-soles (42a, 42b) cut through the interface between the reinforcing ply and the rubber profiled elements over a given length (r), and so that the half-faces (41a, 41b) cut through the rubber profiled elements (21a, 21b) thereby forming a given angle (α) with the plane of the reinforcing ply.

10. Method of assembly according to Claim 9 in which the two ends of a length (10, 20) are butted together by superposing one of the two ends of the reinforcing ply (12, 22) with the other over the length of overlap corresponding substantially to the length (r) cut by the half-soles (42a, 42b) and by superposing said ends (11, 21) of the rubber profiled elements in such a way that, for each of the products, these ends are directly superposed with one another.

## Patentansprüche

1. Schneidmesser (30), das zum Trennen von Bandabschnitten vorgefertigter Produkte bestimmt ist, wobei die Produkte aus mindestens einer Verstärkungslage (12, 22) bestehen, die von in einer Kautschukmischung umhüllten, parallel zueinander liegenden und mit der Längsrichtung des Bands einen gegebenen Winkel formenden Verstärkungsdrähten geformt wird, auf die vorab in Längsrichtung des Bands Bänder von Kautschukprofilteilen (11a, 11b, 21a, 21b) aufgelegt wurden, wobei das Messer **dadurch gekennzeichnet ist, dass** es aus einer im Allgemeinen dreieckigen Spitze (33), die sich in einer Ebene befindet, die im Wesentlichen einen rechten Winkel mit einer Bezugsebene P bildet, einer Fußplatte (32), die eine gegebene Länge (r) hat und sich in einer Ebene im Wesentlichen parallel zur Bezugsebene P befindet, und einer Scheibe (31) zusammengesetzt ist, die sich in einer Ebene befindet, die mit der Bezugsebene P einen bestimmten spitzen Winkel (α) bildet.

2. Schneidmesser (30) nach Anspruch 1, bei dem ein Schneidedraht sich auf den gegenüberliegenden Querseiten der Scheibe (310, 311), der Fußplatte (320, 321) und der Spitze (330, 331) befindet.

3. Schneideinheit (40), **dadurch gekennzeichnet, dass** sie zwei halbe Schneidmesser (40a, 40b) enthält, die je aus einer halben Spitze (43a, 43b), deren Formen zueinander komplementär sind, um eine allgemein dreieckige Form zu beschreiben, wenn die halben Spitzen einander gegenüber zusammengesetzt werden, die sich in einer Ebene befindet, die mit einer Bezugsebene P im Wesentlichen einen rechten Winkel bildet, einer halben Fußplatte (42a, 42b) von einer gegebenen Länge (r), die sich in einer Ebene im Wesentlichen parallel zur Bezugsebene P befindet, und einer halben Scheibe (41a, 41b) bestehen, die sich in einer Ebene befindet, die einen bestimmten spitzen Winkel (α) mit der Bezugsebene P bildet.

4. Schneideinheit (40) nach Anspruch 3, bei der jedes der halben Messer in einer Richtung (D) parallel zur Schnittlinie von zwei der von den halben Spitzen (43a, 43b), den halben Fußplatten (42a, 42b) und den halben Scheiben (41a, 41b) geformten Ebenen beweglich ist.

5. Schneideinheit (40) nach Anspruch 3 oder 4, bei der ein Schneidedraht auf den zwei seitlich gegenüberliegenden Seiten der zwei halben Scheiben (410a, 410b), auf den zwei seitlich gegenüberliegenden Seiten der zwei halben Fußplatten (420a, 420b) angeordnet ist, und bei der eine halbe Spitze (43b) den Teil enthält, in dem die zwei seitlichen Schneidedrähte sich vereinigen (430b und 431b), und die andere halbe Spitze (43a) einen Schneidedraht (430a) auf dem Bereich ihres seitlichen Profils enthält, das sich in der Verlängerung des Schneidedrahts (431b) der anderen halben Spitze befindet.

6. Schneidmesser (30) nach Anspruch 1 oder Schneideinheit (40) nach Anspruch 3 mit einer Heizeinrichtung, die es ermöglicht, das Messer (30) oder die halben Messer (40a, 40b) auf einer bestimmten Temperatur zu halten.

7. Schneidmesser (30) nach Anspruch 1 oder Schneideinheit (40) nach Anspruch 3 mit einer Einrichtung, die es ermöglicht, die Messer mit hoher Frequenz schwingen zu lassen, von der Art mit Ultraschall.

8. Schneidmesser (30) nach Anspruch 1 oder Schneideinheit (40) nach Anspruch 3 mit einer Leitrille (44a, 44b), die sich im Bereich der Verbindung der Ebene der halben Fußplatten (42, 42a, 42b) in Kontakt mit der Verstärkungslage mit der benachbarten Ebene der halben Spitzen (43, 43a, 43b) befindet.

9. Verfahren zum Zusammenbau von Kautschukprodukten, das zur Herstellung von Luftreifen bestimmt ist, das den Schnitt und die Stoßverbindung der Längsenden (10, 20) von Bandabschnitten vormontierter Produkte enthält, die aus mindestens einer Verstärkungslage (12, 22) bestehen, die von in einer Kautschukmischung umhüllten Verstärkungsdrähten geformt wird, die zueinander parallel sind und einen gegebenen Winkel mit der Längsrichtung des Bands bilden, und auf die vorher in Längsrichtung des Bands Bänder von Kautschukprofilteilen (11a, 11b, 21a, 21b) aufgelegt wurden, wobei das Verfahren **dadurch gekennzeichnet ist, dass** das Schneiden von vormontierten Produkten, um einen Abschnitt herzustellen, die folgenden Schritte enthält:
- Positionieren einer Schneideinheit, die von zwei halben Schneidmessern (40a, 40b) geformt wird, die je aus einer halben Spitze, deren Formen zueinander komplementär sind, um eine allgemein dreieckige Form zu beschreiben, wenn die halben Spitzen einander gegenüber (43a, 43b) zusammengebaut werden, die sich in einer Ebene befinden, die im Wesentlichen einen rechten Winkel mit einer Bezugsebene P bildet, einer halben Fußplatte (42a, 42b) einer bestimmten Länge (r) und in einer Ebene im Wesentlichen parallel zur Bezugsebene P befindlich, und einer halben Scheibe (41a, 41b) besteht, die sich in einer Ebene befindet, die einen bestimmten spitzen Winkel (α) mit der Bezugsebene P bildet, im rechten Winkel vor dem Band und im Wesentlichen in gleichem Abstand zu seinen zwei Seitenrändern, damit die von den halben Spitzen geformte Ebene parallel zur Richtung der Verstärkungsdrähte ist, und damit die von den zwei halben Fußplatten geformte Ebene im Wesentlichen parallel zur Ebene der Verstärkungslage ist,
- gleichzeitiges Eintauchen der zwei halben Spitzen (43a, 43b) in die Verstärkungslage, bis die Fußplatten (42a, 42b) jedes der halben Messer mit dem oberen Teil der Verstärkungslage in Berührung kommen,
- Verschieben in Querrichtung und in entgegengesetzte Richtungen (D) jedes der halben Messer, damit die haben Spitzen (43a, 43b) die Verstärkungslage (22) entlang eines Verstärkungsdrahts trennen, damit die halben Fußplatten (42a, 42b) die Schnittlinie zwischen der Verstärkungslage und den Kautschukprofilteilen über eine gegebene Länge (r) trennen, und damit die halben Scheiben (41a, 41b) die Kautschukprofilteile (21a, 21b) trennen, indem sie einen gegebenen Winkel α mit der Ebene der Verstärkungslage bilden.

10. Zusammenbauverfahren nach Anspruch 9, bei dem die Stoßverbindung der zwei Enden eines Abschnitts (10, 20) durch Übereinanderlegen in gegenseitigem Kontakt der zwei Enden der Verstärkungslage (12, 22) über die Überdeckungslänge, die im Wesentlichen der von den halben Fußplatten (42a, 42b) getrennten Länge (r) entspricht, und durch Übereinanderlegen der Enden (11, 21) der Kautschukprofilteile erfolgt, damit für jedes der Produkte diese Enden direkt übereinander liegen.
